# EUROPEAN PATENT APPLICATION

(11) **EP 1 043 551 A2**
(43) Date of publication of application: **11.10.2000**
(21) Application number: 00201244.1
(22) Date of filing: 05.04.2000
(51) Int. Cl.: F25B 29/00, F25B 1/08, F25B 27/02, B63J 2/00

(54) **Vapor jet refrigerating and heat pumping apparatus for a ship**

(30) Priority: 06.04.1999 JP 9913999; 07.04.1999 JP 9950299
(71) Applicant: MAYEKAWA MFG CO.LTD., Koto-ku Tokyo 135-8482 (JP)
(72) Inventor: Sanada, Masaru, Tokyo 135-8482 (JP); Kunori, Shoji, Tokyo 135-8482 (JP)
(74) Representative: De Hoop, Eric

(57) **Abstract**

Vapor jet refrigerating and heat pumping apparatus for a ship to be used for prevention of icing of the trap (54b), guardrail (54a), etc. in winter season and for air conditioning of cabins, etc in summer season.

A refrigerant in a vapor generator (50) is boiled utilizing the waste heat of the propulsion and auxiliary machinery (56) and the generated vapor is introduced to the nozzle of an ejector (52) as the driving vapor.

The driving vapor jetting from the nozzle induces the vapor in an refrigerant evaporator (14,51) connected to the induction zone of the same and the mixed vapor of the induced vapor and the driving vapor is introduced to a vapor carrying passage (60A) which carries the vapor to desired parts (41,54) or a condensing space (42) formed at a part of the ship to condense the vapor. The condensed refrigerant is returned to the evaporator (14,51) and the vapor generator (50). A superheater (10) is disposed between the upper space in the vapor generator (50) and the outlet side of the ejector (52), and a preheater (11) on the entrance passage of the condensed liquid refrigerant to the vapor generator (50), and waste heat of relative lower temperature is introduced to the preheater (11) and that of relative higher temperature to the superheater (10), selecting plural waste heat of different temperature from the waste heat of the propulsion and auxiliary machinery (56) of the ship.

## Description

### BACKGROUD OF THE INVENTION

### Field of the Invention

The present invention relates to a vapor jet refrigerating and heat pumping apparatus for a ship used for prevention of icing and air conditioning of cabins of the ship, particularly to a vapor jet refrigerating and heat pumping apparatus which effectively utilizes waste heat of low temperature under 100° C and can at the same time minimize the affection due to cooling of the vapor in the course of its conveyance.

### Description of the Related Art

Heretofore, almost all of conventional refrigerating and heat pumping apparatuses needed for ships have been of vapor compression refrigerating cycle and equipped with condensers for exclusive use using sea water as cooling water.

Therefore, in the case of installation of the conventional refrigerating apparatus, installation of compressor, drive motor for the compressor, condenser, and device for circulating cooling water have been necessary. As a result, the narrow machinery room has become more restricted forming a cause of lowering of working efficiency.

Further, heretofore, the utilization of the waste heat from propulsion machinery (engine) and auxiliary machinery such as compressor have leaned toward the utilization of waste heat of high temperature over 100° C.

Furthermore, for prevention of loss of safety due to icing of important parts such as radar dome, window, deck, and guardrail of trap, and for prevention of loss of function of important devices such as EPIRB (Emergency Position Indicating Radio beacon) and davit of automatic lifeboat detaching device due to icing and freezing in operation in winter season, installation of anti-icing means to these parts is necessary and an anti-icing means of low cost and energy saving is required.

Heretofore, prevention of icing have been effected through heating with heater such as electric heater or heating through circulation by pump of relatively high temperature oil from the propulsion and auxiliary machinery of the ship, but there remain problems from the point of view of cost and energy saving.

Therefore, to meet the requirement mentioned above, development of anti-icing apparatus is recently being studied, incorporating a vapor jet refrigerating and heat pumping apparatus which is essentially composed of similar element devices as those composing a vapor compression refrigerating and heat pumping apparatus, uses a vapor ejector instead of a compressor, and as a result simple in construction with less moving parts.

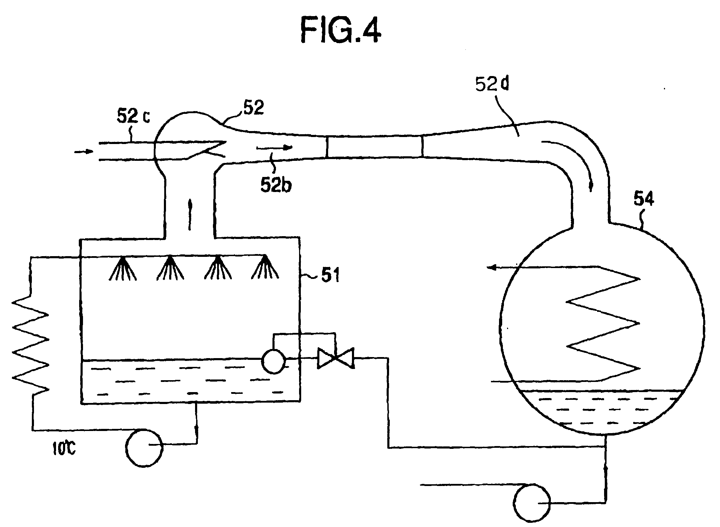

The vapor jet refrigerator uses vapor ejector instead of compressor. As shown in FIG. 4, the driving vapor supplied to the nozzle 52c of an ejector 52 jets from the nozzle 52c in high speed inducing with it the vapor in an evaporator 51, thus keeping the inside of the evaporator 51 in a state of vacuum to promote evaporation of the liquid refrigerant in the evaporator 51, and the driving vapor is mixed with the induced vapor from the evaporator 51 in the mixing zone 52b of the ejector 52, the pressure of the mixed vapor is increased in the diffuser zone 52d of the ejector 52, flows to a condenser 54 to be cooled by means of cooling water and condensed. The temperature of the liquid refrigerant in the evaporator decreases as the liquid refrigerant evaporate deprived of latent heat of vaporization and the cooled refrigerant is used to cool air and so forth. The condensed refrigerant in the condenser is circulated partly to the evaporator and remainder to boiler.

### SUMMARY OF THE INVENTION

The present invention was made to solve the problems mentioned above and an object is to provide a vapor jet refrigerating and heat pumping apparatus for a ship to be used for preventing loss of safety due to icing of radar dome, window, deck, trap, and guardrail and for preventing loss of function of important devices such as EPIRB (Emergency Position Indicating Radio Beacon) and davits of automatic lifeboat detaching device, and also to be used for air conditioning of cabins.

Another object of the present invention is to provide a vapor jet refrigerating and heat pumping apparatus for a ship using ejector driven by the vapor generated utilizing the low temperature waste heat from the propulsion and auxiliary machinery of a ship.

A further object of the present invention is to provide a vapor jet refrigerating and heat pumping apparatus for a ship which can minimize the affection due to cooling of the vapor in the course of conveyance.

A still further object of the present invention is to provide a vapor jet refrigerating and heat pumping apparatus for a ship which intends to fully utilize the waste heat from the propulsion and auxiliary machinery and is able to secure safety along with space and cost saving.

The present invention is characterized in that the refrigerant in a vapor generator is evaporated by utilization of the waste heat of the propulsion and auxiliary machinery such as engines and pumps in a ship. The generated vapor is conducted to a nozzle of an ejector as driving vapor, the vapor of the refrigerant in an evaporator is induced by suction effect of the ejector and mixes with the driving vapor, the mixed vapor is compressed in the diffuser of the ejector and introduced to a carrying passage, the carrying passage passes through the desired portion of the ship and/or connected to the condensing space provided at a part of the hull where the mixed refrigerant vapor releases heat, and the condensed refrigerant returns to the evaporator and vapor generator, thus a closed cycle is performed.

Thus, as an apparatus according to the present invention utilizes vapor ejector instead of a compressor which is a constituent of a conventional vapor compression refrigerating cycle, the compressor and its drive motor become unnecessary, and further, as a vapor generator which utilizes the said waste heat is used to generate the driving vapor for the ejector, utilization of waste heat in a ship and energy and space saving are attained.

Also, concerning to condenser, as condensing of the refrigerant is accomplished in the carrying passage passing through the desired parts of the ship and/or connected to the condensing space provided at a part of the ship, an independent condenser is unnecessary and space saving is achieved.

It is preferable, in the present invention, to provide a preheater on the passage of the refrigerant at the entrance side of the vapor generator, and to introduce as heat source for the preheater a waste heat of lower temperature than that introduced to the vapor generator among the waste heat of different temperature obtained from the propulsion and auxiliary machinery of the ship.

The circulating refrigerant in the carrying passage is deprived of its latent heat at the condensing parts and becomes liquid or subcooled liquid, i.e. compressed liquid, and further cooled in the latter part of flowing in the carrying passage to a receiver. The subcooled or compressed liquid in the receiver is passed through a preheater which utilizes as preheating heat source the selected lower temperature waste heat, before supplied to the waste heat boiler (vapor generator), thus the low temperature level waste heat is effectively utilized for preheating the refrigerant supplied to the waste heat boiler.

This has an effect that the utilization of the lower temperature heat source in the neighborhood of 25° C such as cooling water of the after cooler of the propulsion and auxiliary engine is possible, and as the refrigerant sub-cooled due to being used for anti-icing purpose in the condensing parts in winter operation can be preheated to about 25° C, the burden to the higher temperature waste heat source for heating the refrigerant in the vapor generator is reduced.

It is suitable in the present invention that a superheater is provided at a selected location between the upper space in the vapor generator and the outlet side of the ejector and the waste heat of the propulsion and auxiliary engine in the ship is utilized as the heat source for the superheater.

The vapor is conducted to the nozzle of the ejector as the driving vapor and the high speed vapor jet flow induces the vapor in the evaporator to effect vacuum in the evaporator and the liquid refrigerant in the evaporator boils and evaporates vigorously, and the liquid refrigerant itself cools down, being deprived of latent heat of vaporization.

In the ejector heat pump, the induced vapor from the evaporator mixes with the driving vapor in the mixing zone where the temperature of the mixed vapor largely decreases from that of the driving vapor because of the expansion of the driving vapor and the low temperature of the vapor induced from the evaporator. The mixed vapor is compressed in the diffuser zone following the mixing zone, pressure and temperature rises, and at the outlet of the diffuser the mixed vapor is in a superheated state. But the mixed vapor is somewhat cooled in the course of conveyance to the condensing parts provided at the end side of the carrying passage and it may happen that a part of the mixed vapor condenses to become wet vapor. If so, the smooth and stable flow of the mixed vapor is hindered. The superheater of the mixed vapor is to prevent this phenomenon and to secure the full release of the latent heat of the mixed vapor at the condensing parts where icing is to be prevented.

As mentioned above, the liquid refrigerant in the evaporator cools down as it is evaporated, sea water is circulated in the heat exchanging means disposed in the evaporator to give heat to the liquid refrigerant, thus the evaporator and the ejector constitute an ejector heat pump to pump up heat from sea water.

It is preferable to dispose a superheater to superheat the mixed vapor at a selected location between the upper space in the vapor generator and the outlet side of the ejector and a preheater to preheat on the passage of the refrigerant at the entrance of the vapor generator and to introduce as heat source for the preheater a waste heat of lower temperature than that introduced to the vapor generator among the waste heat of different temperature obtained from the propulsion and auxiliary machinery of the ship.

This has an effect that the mixed vapor from the ejector is kept dry all the way to the parts to be prevented from icing and the waste heat of all of different temperature level of the propulsion and auxiliary machinery is utilized as the heat source, and particularly the waste beat of lower temperature level under 40° C other than that over 70° C utilized for evaporation and superheating is utilized as the heat source for preheating.

The present invention is characterized in that the refrigerant vapor from the ejector is carried to the anti-icing portion to prevent icing and the anti-icing portion is functioned as condenser.

As the mixed vapor from the ejector is sufficiently superheated, even in the case where the carrying passage of the mixed vapor is long with considerable heat loss, the latent heat of the mixed vapor is fully utilized to attain sufficient anti-icing effect without partial condensation of the vapor in the course of carriage.

The present invention is characterized in that the heat pump cycle is of closed cycle and the carrying passage after the anti-icing portions is connected to condensing space which is formed on the bottom or hull facing sea water to keep the temperature of the condensed liquid refrigerant by exchanging heat with sea water, and particularly the condensing space is formed as a part of intermediate space of double bottom construction or a part of ballast tank to make possible heat exchange between the refrigerant and sea water.

This has an effect that, as the refrigerant is thermally contacted with sea water which is of virtually constant temperature, evaporation speed in the evaporator is kept constant. Therefore, as the heat pump cycle is of closed cycle, the operation of the heat pump cycle is stable according to the waste heat supplied to the vapor generator.

In the present invention refrigerant of high boiling point over 50° C under atmospheric pressure is used and the operating pressure of the cycle is kept negative, i.e. under atmospheric pressure.

According to the present invention, as the refrigerant is of high boiling point over 50° C under atmospheric pressure, even in case of leakage the refrigerant is in the state of liquid and not dangerous to safety, and even when, in the case of accident such as collision of freight against the carrying passage, the refrigerant spouts out from the break, a second disaster is prevented and the ship's safety is secured.

As the operating pressure of the cycle is kept negative, the boiling point of the refrigerant is low and the utilization of low temperature waste heat is possible. Besides, as low vapor pressure suction gas flow is possible and no pump for carrying the mixed vapor is necessary.

In the present invention the evaporator connected to the induction zone of the ejector is a vessel having receiver portion in its lower part and sea water is circulated through a heat exchanger pipe immersed in the refrigerant to heat the same. This has an effect that, as the temperature of sea water is almost constant, the temperature of the refrigerant in the evaporator is kept near constant and so its evaporation speed is stable resulting in stable operation.

The present invention is suitable to be composed so that an evaporator connected to the induction zone of the ejector is a dehumidifying cooler with the evaporator contacting the air in the cabins and it is suitable that an expansion valve is connected to the inlet side of the dehumidifying cooler and the induction zone to the outlet side of the same. In this case the cabins and freight rooms can be air-conditioned without utilizing any other refrigerating cycle.

It is preferable in the present invention that the parts which are positioned ahead of the carrying passage of the mixed refrigerant and function as condensing portion are condensing space of double shell construction utilizing the walls of guardrails, traps, and bridge. This has an effect that not only the prevention of icing of the said parts but also the function of condensing is attained.

Accordingly, the present invention can be employed for anti-icing but also for refrigerating and heat pumping cycle which may only be used for air conditioning, etc.

According to the construction as described hitherto, the field of its utilization is not limited simply to anti-icing of some parts of a ship but is available for air conditioning, dehumidification, etc. in the ship. In addition to this, the blank space in the ship and the parts exposed to atmosphere, which are the ship's own equipment, are employed as condenser to be used in the refrigerating and heat pumping apparatus of the present invention, so no specific space to provide condenser is necessary and space saving construction is possible.

### BRIEF DESCRIPTION OF THE DRAWING

FIG. 1 is a diagrammatic sketch showing the construction of the first embodiment of a vapor jet refrigerating and heat pumping apparatus for a ship according to the present invention.
FIG. 2 is a diagrammatic sketch showing the construction of the second embodiment of a vapor jet refrigerating and heat pumping apparatus for a ship according to the present invention.
FIG. 3 is a diagrammatic sketch showing the construction of the third embodiment of a vapor jet refrigerating and heat pumping apparatus for a ship according to the present invention, specifically provided with air conditioning function in addition to the anti-icing function of the first and second embodiment, according to the present invention.
FIG.4 is a diagrammatic sketch showing a conventional vapor jet refrigerator.

### DETAILED DESCRIPTION OF THE PREFERRED EMBODIMENT

A preferred embodiment of the present invention will now be detailed with reference to the accompanying drawings. It is intended, however, that unless particularly specified, dimensions, materials, relative positions and so forth of the constituent parts described in the embodiment shall be interpreted as illustrative only not as limitative of the scope of the present invention.

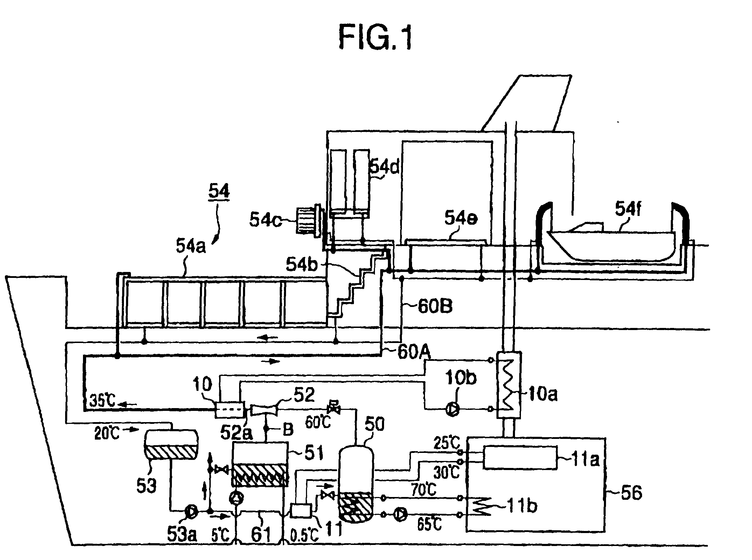

FIG. 1 is a diagrammatic sketch showing the construction of the first embodiment of a vapor jet refrigerating and heat pumping apparatus (ejector type heat pump) for a ship according to the present invention. As shown in FIG. 1, there are on the deck of a ship several deck equipment 54 such as a radar dome, windows 54d, an operating room deck 54e, trap 54b, guardrail 54a, etc., and further, important devices such as EPIRB 54c and davit for lifeboat 54f, and loss of safety due to icing and loss of function due to icing and freezing make important problems in the winter season.

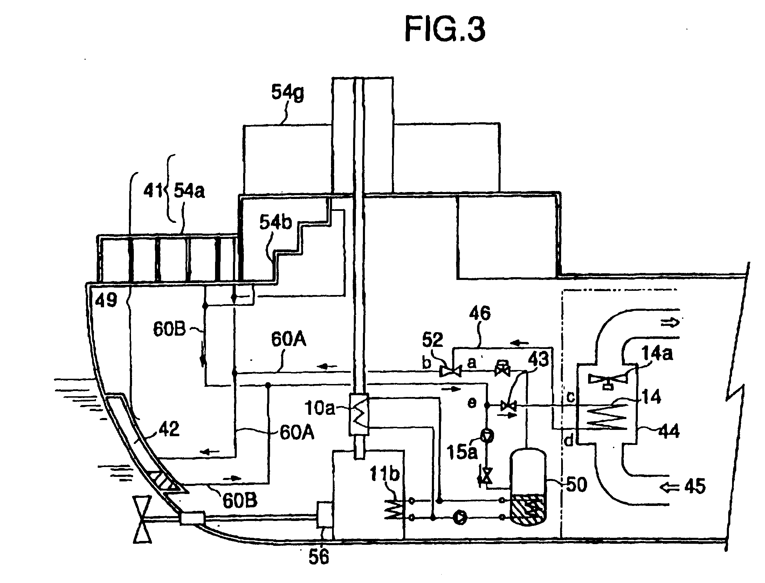

The first embodiment is constituted so that the refrigerant vapor in superheated state heated by a superheater 10 is carried through a carrying passage 60A and returned through a return passage 60B to a receiver 53 after deprived of its beat at a guardrail 54a and others. The carrying passage 60A may be disposed zigzag on the back side of the important devices such as EPIRB 54c. The refrigerant vapor carried in the carrying passage 60A to the deck equipment 54 and the important devices such as EPIRB releases heat there heating the same to prevent icing and is cooled to condense to liquid which returns through the return passage 60B to the receiver 53. The receiver may suitably be formed as a hull condenser 42 as described later in FIG. 3.

56 is an engine (propulsion machinery) and a heat exchanger 10a is provided surrounding the exhaust pipe wall of the engine to obtain hot water of about 70° C - 100° C. The hot water is sent by means of a pump 10b to the superheater 10 provided after an ejector 52 to superheat the mixed refrigerant vapor of driving vapor from a waste heat boiler 50 and vapor induced by the ejector 52 from an evaporator 51 to temperatures of about 35° C - 50° C to secure sufficient temperature to heat the portion to be prevented from icing.

The refrigerant vapor superheated in the superheater 10 is carried to the portions to be prevented from icing to heat there and cooled, for example, to about 20° C and returned through the return passage 60B to the receiver 53.

The liquid refrigerant in the receiver 53 is sent by means of a pump 53a to the evaporator 51 and a preheater 11. The preheater 11 includes a charge air cooler 11a of the engine 56 where the refrigerant cools the charge air and the refrigerant itself is heated, for example, from 25° C to 30° C and supplied to the waste heat boiler (vapor generator) 50.

In the boiler 50 the liquid refrigerant of about 25° C is heated to boil by means of heat exchanger pipe in which the engine cooling water of about 70° C is circulated to heat the liquid refrigerant, the cooling water itself cooling down to about 65° C to be returned to the engine.

The pressure in the waste boiler 50 is arranged to be negative pressure at which the refrigerant evaporates at about 70° C.

This embodiment uses refrigerant of high boiling point above 60° C in the point of view of ship safety and, for example, arranges the pressure in the waste boiler in each respective negative pressure under which pressure, water, 1, 1, 2 trichloroethane (CHCl₂CH₂CL boiling point 114° C). etc. boils at 60° C - 70° C.

In the case of HFEV(hydrofluoroether, HFE-7100 : C₄F₉0CH₃, B.P. 60° C, HFE-7200 : C₄F₉0C₂H₅, B.P. 78° C) which 3M Co. developed as alternatives for specific flon, the refrigerant can be boiled at or near atmospheric pressure.

Therefore, it is preferable to use HFE refrigerant, for the pressure in the waste boiler needs not to be negative.

By using the refrigerant of high boiling point, the pressure lower than about 2 kg/cm², which is near atmospheric pressure, of the driving vapor at the inlet of the nozzle of the ejector 52 is sufficient to carry the low pressure mixed vapor from the ejector 52 through the carrying passage, and so if the pipe line is broken due to collision of freight or other accident, the second disaster by spouting out of the refrigerant vapor is prevented.

In the mean time, the liquid refrigerant in the evaporator 51 tends to cool down due to evaporation, so sea water is circulated through the heat exchanger pipe immersed in the liquid refrigerant to keep it near the temperature of sea water.

The action of the embodiment is as follows.

The engine cooling water of about 70° C is introduced to the liquid refrigerant in the waste heat boiler 50 to heat and boil the liquid refrigerant of about 25° C, and the generated vapor flows to the nozzle of the ejector 52 where the vapor jets with high speed from the nozzle due to pressure difference, inducing the vapor of refrigerant in the evaporator 51 and thus keeping the pressure in the evaporator 51 near vacuum which promotes evaporation. Due to the evaporation the liquid refrigerant is deprived of heat, which lowers the temperature of the liquid.

In order to keep the temperature of the liquid refrigerant to a proper level, sea water is circulated through the heat exchanger pipe immersed in the liquid refrigerant in the evaporator 51, which sea water heats the liquid refrigerant.

The expanded high speed driving vapor mixes with the vapor induced from the evaporator in the mixing zone and the mixed vapor is compressed in the diffuser zone of the ejector 52 and then superheated at the superheater 10 disposed after the ejector 52 to about 35° C - 50° C and flows through the carrying passage 60A to the radar dome, the windows 54d, the operation room deck 54e, the trap 54b, guardrail 54a, etc., and further, to EPIRB 54c, lifeboat davit 54f, etc., to prevent their icing in the winter season, releasing its heat there.

The refrigerant deprived of heat through heat exchange with the equipment and devices to be anti-iced and condensed returns through the return passage 60B to the receiver 53 and the waste heat boiler 50.

Therefore, according to the present invention, it is possible to induce the refrigerant vapor in the evaporator 51 by means of the ejector 52 driven by the refrigerant vapor generated in the waste heat boiler 50, to superheat the mixed vapor at the superheater 10 located after the outlet 52a of the ejector 52 by high temperature waste heat of the engine 56, and to carry the mixed vapor through the carrying passage 60A to the condenser zone which is constituted at the equipment and devices to be prevented from icing to be returned through the return passage 60B to the receiver 53.

The refrigerant returned to the receiver 53 is flowed back to the evaporator 51 and the waste heat boiler 50 by means of a pump 53a. The refrigerant to be flowed back to the waste heat boiler 50 is preheated by the preheater 11 including 11a before supplied to the waste heat boiler 50, so the heat burden for the waste heat boiler 50 is lightened by that amount.

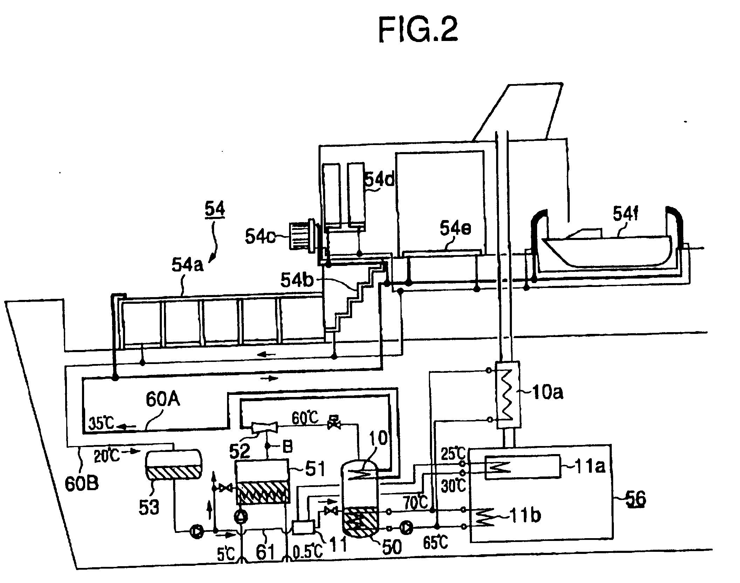

FIG. 2 shows an embodiment in which a superheating means is disposed in the upper space of the waste heat boiler 50.

The refrigerant in the waste heat boiler 50 is heated by the higher temperature waste heat, i.e. cooling water heat of the exhaust pipe in addition to by the lower waste heat, i.e.cooling water heat of the engine 56. The higher temperature waste heat is obtained from the exhaust pipe cooler 10a and the lower waste heat is from the cooling water 11b of the engine 56.

The mixed vapor flowing out of the ejector 52 is introduced to the superheating means 10 disposed in the waste heat boiler instead of after the outlet of the same as the first embodiment. Also in this case, the temperature of 35° C ∼ 40° C of the mixed vapor is secured.

That the preheating means 11 preheats the refrigerant to be supplied to the waste heat boiler 50 to temperatures about 30° C and the heat burden for the waste heat boiler 50 is lightened is same as the first embodiment.

According to the embodiments described above, by utilizing the waste heats of several temperature level of the engine 56 are selectively utilized for suitable purpose of heating, preheating, and superheating, the effective utilization of waste heat is realized, and by utilizing the sensible and latent heat of the refrigerant vapor, the prevention of icing of the equipment and devices which are to be prevented from icing to avert the loss of safety and function is realized.

FIG. 3 shows a diagrammatic sketch of a construction of the third embodiment of a vapor jet refrigerating and heat pumping apparatus for a ship, specifically a construction with the function of air conditioning of cabins, freight rooms, operating rooms, etc. in summer season in addition to the function of anti-icing in winter season.

Unlike the previous embodiments, the embodiment has no superheater and preheater. The apparatus has a condenser zone 43, a deck side condenser 41 including the deck, trap, guardrail, etc. which are anti-iced parts 54 in winter season and in addition to this a hull condenser 42 provided on the wall of the ballast tank, etc. as condensing part 43. The deck side condensers 41 are formed of double shell structure of which the inner spaces are connected to the carrying passage 60A of refrigerant vapor flowing out from an ejector 52. The hull condenser 42 is formed utilizing a part of the double bottom or ballast tank of the ship. The carrying passage 60A is branched to be connected to the deck side condenser 41 and the hull condenser 42. The refrigerant flowed through the deck side condenser is introduced to the hull condenser. In the hull condenser 42 the refrigerant is cooled by means of sea water thermally contacting to the refrigerant and as the temperature of sea water is almost constant the temperature of the condensed liquid refrigerant in the hull condenser is stable, enabling stable operation of the refrigerating cycle.

The embodiment according to the invention does not use the evaporator of vessel type as the previous embodiments but uses an expansion valve 43, and a pipe evaporator 14. The pipe evaporator 14 and a fan 14a are disposed in an air conditioner or dehumidifier 44. The evaporator 14 absorbs heat from the air in the cabins, freight rooms, operating rooms, etc. circulated by a fan 14a. The induction tone of the ejector 52 is connected to the outlet pipe conduit 46 and the inlet of the nozzle of the ejector 52 to the outlet pipe conduit of the waste heat boiler (vapor generator) 50.

The condensed refrigerant in the hull condenser 42 kept almost constant in temperature is introduced to the waste heat boiler (vapor generator) 50 to be heated to boil. The waste heat carried by the engine cooling water flowing out from the engine jacket 11b and the exhaust pipe cooling water heated in the exhaust pipe cooler 10a the temperature of which is about 80° C is sufficient to generate in the waste heat boiler (vapor generator) 50 enough amount refrigerant vapor for driving the ejector 52.

Therefore, according to the embodiment, by disposing the evaporator 14 to supply vapor to the induction zone of the ejector 52 in the air conditioner or dehumidifier 44 and making the air circulated by the fan 14a contact thermally with the evaporator 14, cooling and dehumidification in summer season is performed (in winter season the apparatus may be used for cooling the engine room, etc. or stopped) by utilizing effectively the waste heat of the engine 56.

As an example, a case in which the said HFE-700 (C₄F₉0CH₃, boiling point 60° C) is used as refrigerant, the temperature of sea water is 25° C, the temperature of the said waste heat source (engine and exhaust cooling water mixed) 80° C, and the temperature and pressure at concerning parts are as follows in summer season is described hereunder.
Driving vapor at the inlet on the nozzle of the ejector 52: temperature Tg : 70° C, pressure 1.40 bar,
Condensing temperature Tc : 35
Sea water at the entrance of the hull condenser 12 : 25° C,
Refrigerant in the return passage at e which is the entrance to the expansion valve: 30° C, 0.41 bar,
Refrigerant at c the inlet of the evaporator 14 : 5 ,
Refrigerant at d the outlet of the evaporator 14 : temperature 10° C, and pressure 0.18 bar.

The pressure of the vapor generator is near atmospheric pressure and the refrigerating cycle pressure is negative, i.e., under atmospheric pressure as shown above.

That is, the liquid refrigerant in the vapor generator 50 is boiled heated by the waste heat carried by the engine and exhaust pipe cooling water of 80° C and the generated vapor of 70° C , 1.40 bar is introduced to the nozzle of the ejector 52 as the driving vapor. The ejector 52 induces the vapor in the evaporator 14 which is 10° C, 0.18 bar at the exit of the evaporator. The vapor flow out from the ejector 52 has the temperature of 50° C and the pressure of a little higher than 0.41 bar, higher by the amount of pressure loss in the carrying and return passages, and carried through the carrying passage 60A under the negative pressure to the deck side condenser 41 where the refrigerant vapor is cooled and to the hull condenser 42 where the refrigerant vapor is condensed to liquid of 30° C cooled through thermal contact with sea water of 25° C. The liquid refrigerant is returned under the pressure of 0.41 bar partly to the vapor generator 50 by means of the pump 15a and the remaining part is adiabatically expanded through the expansion valve 43 to be introduced to the evaporator 14.

Therefore, according to the embodiment, by providing the condenser 41, 42 at a part of the hull, space demanded by conventional condenser is unnecessary and space saving is effected, and at the same time energy-saving cooling and dehumidification utilizing engine waste heat is enabled.

## Claims

1. A vapor jet refrigerating and heat pumping apparatus for a ship characterized in that the vapor generated by evaporating a refrigerant in a vapor generator by utilizing the waste heat of the propulsion and auxiliary machinery such as engines and pumps in a ship is introduced to the nozzle of an ejector as the driving vapor, an evaporator is connected to the induction zone of the ejector, the mixed vapor of the vapor induced from the evaporator by the induction effect of the ejector and the vapor jets from the nozzle of the ejector is introduced to a carrying passage, the carrying passage is thermally contacted to desired parts of the ship or connected to a condensing space provided at a part of the hull of the ship, and the condensed refrigerant is returned to the evaporator and the vapor generator, constituting refrigerating or heat pumping cycle.

2. A vapor jet refrigerating and heat pumping apparatus for a ship according to claim 1, characterized in that, a preheater is provided in the entrance passage of the condensed refrigerant to the vapor generator to preheat the liquid refrigerant to be introduced to the vapor generator, and the waste heat lower in temperature than the waste heat of the propulsion and auxiliary machine introduced to the vapor generator is utilized as the heat source for the preheater.

3. A vapor jet refrigerating and heat pumping apparatus for a ship according to claim 1, characterized in that, a superheater is provided at a selected location between the upper space in the vapor generator and the outlet side of the ejector, and the waste heat of the propulsion and auxiliary machinery of the ship is utilized as the heat source for the super heater.

4. A vapor jet refrigerating and heat pumping apparatus for a ship according to claim 1, characterized in that, a superheater is provided at a selected location between the upper space in the vapor generator and the outlet side of the ejector, a preheater is provided in the entrance passage of the condensed refrigerant to the vapor generator, and waste heat of relative lower temperature is introduced to the preheater and that of relative higher temperature to the superheater, selecting among the waste heat of the propulsion and auxiliary machinery in the ship plural waste heat of different temperature.

5. A vapor jet refrigerating and heat pumping apparatus for a ship according to claim 1, characterized in that, the forward side of the refrigerant vapor carrying passage connected to the outlet of the ejector is located to contact to parts to be anti-iced, and the portions of the carrying passage contacted to the parts function as condenser.

6. A vapor jet refrigerating and heat pumping apparatus for a ship according to claim 1, characterized in that, the refrigerating heat pumping cycle is closed cycle, and the forward side of the refrigerant vapor carrying passage connected to the outlet of the ejector is connected to a condensing space formed at the bottom or hull of the ship facing sea water to control the variation of the temperature of the liquid refrigerant in the space through thermalcontact with sea water.

7. A vapor jet refrigerating and heat pumping apparatus for a ship according to claim 1, characterized in that, the refrigerant of boiling point of 60° C and higher at atmospheric pressure is used, the refrigerating and heat pumping cycle passage is closed, and the operating pressure of the cycle is kept under atmospheric pressure.

8. A vapor jet refrigerating and heat pumping apparatus for a ship according to claim 1, characterized, in that, the evaporator connected to the induction zone of the ejector is a vessel having receiver part in its lower part, and induction of the refrigerant vapor through the ejector is performed while heating the liquid refrigerant by circulating sea water through a heat exchanger means disposed in the receiver part.

9. A vapor jet refrigerating and heat pumping apparatus for a ship according to claim 1, characterized in that, the evaporator connected to the induction zone of the ejector is a dehumidifying cooler with which the air in the cabins thermally contacts, an expansion valve is connected to the inlet side of the dehumidifying cooler and the induction zone of the ejector to the outlet side of the same.

10. A vapor jet refrigerating and heat pumping apparatus for a ship according to claim 1, characterized in that, the portion functioning as condenser provided at the forward side of the refrigerant vapor carrying passage is the condenser space of double shell construction exploiting the walls of guardrail, trap, bridge, etc.

11. A vapor jet refrigerating and heat pumping apparatus for a ship according to claim 1, characterized in that, the portion functioning as condenser provided at the forward side of the refrigerant vapor carrying passage is the space of double shell construction formed by constructing a part of the bottom of a ship to be double bottom or formed with a part of the ballast tank to enable the refrigerant to contact thermally with sea water.
